(19) **Europäisches Patentamt / European Patent Office / Office européen des brevets**

(11) **EP 3 901 365 B1**

(12) **EUROPEAN PATENT SPECIFICATION**

(45) Date of publication and mention
of the grant of the patent:
**15.10.2025 Bulletin 2025/42**

(21) Application number: **19898432.0**

(22) Date of filing: **03.12.2019**

(51) International Patent Classification (IPC):
*D06N 3/14* $^{(2006.01)}$     *C08G 18/00* $^{(2006.01)}$
*C08G 18/08* $^{(2006.01)}$     *C08G 18/44* $^{(2006.01)}$
*C08G 18/65* $^{(2006.01)}$     *C08G 18/73* $^{(2006.01)}$
*C08G 18/75* $^{(2006.01)}$     *D06N 3/00* $^{(2006.01)}$
*C08G 18/12* $^{(2006.01)}$     *C08G 18/22* $^{(2006.01)}$
*C08G 18/32* $^{(2006.01)}$     *C08G 18/34* $^{(2006.01)}$
*C09D 175/06* $^{(2006.01)}$

(52) Cooperative Patent Classification (CPC):
(C-Sets available)
C08G 18/3206; C08G 18/0823; C08G 18/0866;
C08G 18/12; C08G 18/227; C08G 18/3234;
C08G 18/348; C08G 18/44; C08G 18/73;
C08G 18/758; C09D 175/06; D06N 3/0095;
D06N 3/14; D06N 3/146; D06N 3/147;     (Cont.)

(86) International application number:
**PCT/JP2019/047147**

(87) International publication number:
**WO 2020/129605 (25.06.2020 Gazette 2020/26)**

(54) **URETHANE RESIN COMPOSITION, FILM AND SYNTHETIC LEATHER**

URETHANHARZZUSAMMENSETZUNG, FILM UND KUNSTLEDER

COMPOSITION DE RÉSINE URÉTHANE, FILM ET CUIR SYNTHÉTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.12.2018 JP 2018236367**

(43) Date of publication of application:
**27.10.2021 Bulletin 2021/43**

(73) Proprietor: **DIC Corporation
Tokyo 174-8520 (JP)**

(72) Inventors:
• **Tseng YaYi**
**Takaishi-shi, Osaka 592-0001 (JP)**
• **MAEDA Ryo**
**Takaishi-shi, Osaka 592-0001 (JP)**

(74) Representative: **Kraus & Lederer PartGmbB
Thomas-Wimmer-Ring 15
80539 München (DE)**

(56) References cited:
EP-A1- 3 398 980     EP-A1- 3 795 603
WO-A1-2018/159228     CA-A1- 3 053 737
JP-A- 2005 041 991     JP-A- 2013 217 006
JP-A- 2016 027 119     JP-A- 2018 104 486
JP-A- H04 114 025     JP-A- H07 150 479

• DATABASE WPI Week 199222, Derwent World
Patents Index; AN 1992-178695, XP002805096
• DATABASE WPI Week 201372, Derwent World
Patents Index; AN 2013-S54743, XP002805097
• DATABASE WPI Week 201848, Derwent World
Patents Index; AN 2018-526443, XP002805098

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

EP 3 901 365 B1

(52) Cooperative Patent Classification (CPC): (Cont.)
**D06N 3/148**

C-Sets
**C08G 18/12, C08G 18/3234**

**Description**

Technical Field

The present invention relates to a urethane resin composition, a coating, and a synthetic leather.

Background Art

Urethane resin compositions in which a urethane resin is dispersed in water can reduce environmental loads better than conventional organic solvent-based urethane resin compositions, and therefore, have recently started to be suitably used as materials for manufacturing synthetic leather (including artificial leather), gloves, coating agents for curtain, sheets, and the like. Furthermore, in recent years, against the backdrop of global warming and depletion of petroleum resources, global demand for biomass raw materials, such as plants, has been increasing to reduce the amount of usage of fossil resources, such as petroleum.

High durability is required of the urethane resin compositions, in particular, when the urethane resin compositions are used for synthetic leather used as interior materials for vehicles. Evaluation items of this durability are manifold, examples of which include heat resistance, moist heat resistance, light resistance, chemical resistance, and wear resistance (for example, see PTL 1). Of these evaluation items, resistance to oleic acid contained in sebum is strongly required because synthetic leather frequently comes into contact with the human body. However, it has been pointed out that aqueous urethane resins are inferior in oleic acid resistance to solvent-based urethane resins.

Furthermore, in recent years, with uses in cold climate regions in mind, the level of requirement for flexibility at low temperature is increasing.

Citation List

Patent Literature

PTL 1: Japanese Unexamined Patent Application Publication No. 2016-222921

Other information relevant to urethane compositions suitable for artificial leather can be found in CA3053737A1, JPH04114025A, EP3398980A1, JP2013217006A, JP2018104486A, and EP3795603A1

Summary of Invention

Technical Problem

An object of the present invention is to provide a urethane resin composition including water, the urethane resin composition being produced using a biomass raw material and being excellent in oleic acid resistance and low-temperature flexibility.

Solution to Problem

The present invention provides a urethane resin composition according to claim 1, including an anionic urethane resin (X) and water (Y), in which the anionic urethane resin (X) is produced using, as essential raw materials: a polyol (a) including a polycarbonate polyol (a1) produced using biomass-derived decanediol as a raw material; and a polyisocyanate (b) including an aliphatic polyisocyanate (b1) and an alicyclic polyisocyanate (b2).

Furthermore, the present invention provides a dry coating formed from a urethane resin composition, and provides a synthetic leather including the coating as a skin layer.

Advantageous Effects of Invention

The urethane resin composition according to the present invention includes water, and is produced further using a biomass-derived raw material, is an environment-responsive material, and is capable of forming a coating excellent in oleic acid resistance and low-temperature flexibility. Furthermore, when satisfying a specific requirement, the urethane resin composition is capable of forming the coating also excellent in hydrolysis resistance. Thus, the urethane resin composition according to the present invention can be suitably used as a material for synthetic leather, and in particular, can be suitably used as a material for forming a skin layer.

Description of Embodiments

The urethane resin composition according to the present invention includes: an anionic urethane resin (X) produced using a specific essential raw material; and water (Y).

To achieve excellent oleic acid resistance and low-temperature flexibility, the anionic urethane resin (X) is produced using, as essential raw materials: a polyol (a) including a polycarbonate polyol (a1) produced using decanediol and butanediol as raw materials and a polyisocyanate (b) including an aliphatic polyisocyanate (b1) and an alicyclic polyisocyanate (b2).

The polycarbonate polyol (a1) produced using the biomass-derived decanediol as a raw material is an essential component for achieving excellent oleic acid resistance and low-temperature flexibility. Since the decanediol is a biomass-derived raw material, a more environment-friendly material can be provided. As the polycarbonate polyol (a1), a reaction product of a glycol compound including the biomass-derived decanediol with carbonate and/or phosgene can be used, and specifically, the polycarbonate polyol described in Japanese Unexamined Patent Application Publication No. 2018-127758 can be used.

From the viewpoint of achieving more excellent oleic acid resistance and low-temperature flexibility, 1,10-decanediol is preferably used as the decanediol.

Examples of a glycol compound that can be used, other than the decanediol and the butanediol include ethylene glycol, propylene glycol, 1,3-propanediol, 2-methyl-1,3-propanediol, 1,5-pentanediol, neopentyl glycol, 1,6-hexanediol, 1,5-hexanediol, 3-methyl-1,5-pentanediol, 2-methyl-1,8-octanediol, 1,7-heptanediol, 1,8-octanediol, 1,9-nonanediol, 1,8-nonanediol, 2-ethyl-2-butyl-1,3-propanediol, 1,12-dodecanediol, 1,4-cyclohexanedimethanol, 1,3-cyclohexanedimethanol, trimethylolpropane, trimethylolethane, glycerin, ε-caprolactone, and neopentylglycol. These compounds may be used alone or in combination of two or more. From the viewpoint of achieving more excellent oleic acid resistance and low-temperature flexibility.

The biomass-derived decanediol and the butanediol are used in combination, moreover the total amount of the biomass-derived decanediol and the butanediol used in the glycol compound is preferably 50 mol% or more, more preferably 70 mol% or more, and still more preferably 80 mol% or more.

Furthermore, the molar ratio [(C4)/(C10)] is within a range 75/25 to 98/2, from the viewpoint of achieving more excellent oleic acid resistance and low-temperature flexibility.

Examples of the carbonate that can be used include dimethyl carbonate, diethyl carbonate, diphenyl carbonate, ethylene carbonate, and propylene carbonate. These compounds may be used alone or in combination of two or more.

From the viewpoint of achieving more excellent oleic acid resistance and low-temperature flexibility, the number average molecular weight of the polycarbonatediol (a1) is preferably within a range of 500 to 100,000, more preferably within a range of 700 to 10,000, still more preferably within a range of 1,500 to 3,500, and particularly within a range of 2,500 to 3,500. Note that the number average molecular weight of the polycarbonatediol (a1) is a value determined by gel permeation chromatography (GPC).

Preferable examples of the polycarbonatediol (a1) that are commercially available include "BENEBiOL NL-3010DB", manufactured by Mitsubishi Chemical Corporation.

In the polyol (a), the polycarbonatediol (a1) and other polyols may be used in combination, if necessary. The content of the polycarbonate polyol (a1) in the polyol (a) is preferably 50% by mass or more, more preferably 70% by mass or more, and still more preferably 80% by mass or more.

Examples of the other polyols that can be used include: polycarbonate polyols other than the polycarbonate polyol (a1), polyester polyols, polyether polyols, and polyacrylic polyols. These polyols may be used alone or in combination of two or more.

In order to achieve excellent oleic acid resistance and low-temperature flexibility, it is essential for the polyisocyanate (b) to include an aliphatic polyisocyanate (b1) and an alicyclic polyisocyanate (b2).

Examples of the aliphatic polyisocyanate (b1) that can be used include hexamethylene diisocyanate and lysine diisocyanate. These polyisocyanates may be used alone or in combination of two or more.

Examples of the alicyclic polyisocyanate (b2) that can be used include cyclohexane diisocyanate, isophorone diisocyanate, dicyclohexylmethane diisocyanate, tetramethylxylylene diisocyanate, and norbornene diisocyanate. These polyisocyanates may be used alone or in combination of two or more.

From the viewpoint of achieving more excellent oleic acid resistance and low-temperature flexibility, the molar ratio [(b1)/(b2)] of the aliphatic polyisocyanate (b1) to the alicyclic polyisocyanate (b2) is preferably within a range of 10/90 to 90/10, and more preferably within a range of 20/80 to 80/20.

In the polyisocyanate (b), other polyisocyanates than the aliphatic polyisocyanate (b1) and the alicyclic polyisocyanate (b2) may be used in combination, if necessary. The total amount of the aliphatic polyisocyanate (b1) and the alicyclic polyisocyanate (b2) used in the polyisocyanate (b) is preferably 50 mol% or more, more preferably 70 mol% or more, and still more preferably 80 mol% or more.

Examples of the other polyisocyanates that can be used include phenylene diisocyanate, toluene diisocyanate, diphenylmethane diisocyanate, xylylene diisocyanate, naphthalene diisocyanate, polymethylene polyphenyl polyisocyanate, and carbodiimidated diphenylmethane polyisocyanate. These polyisocyanates may be used alone or in combination of two or more.

Specific examples of the anionic urethane resin (X) that can be used in the present invention include a reaction product of the polyol (a), the polyisocyanate (b), an anionic group-containing compound (c), and, if necessary, a chain extender (**d**).

Examples of the anionic group-containing compound (c) that can be used include: carboxyl group-containing compounds, such as 2,2-dimethylolpropionic acid, 2,2-dimethylolbutanoic acid, 2,2-dimethylolbutyric acid, 2,2-dimethylolpropionic acid, and 2,2'-valeric acid; and sulfonyl group-containing compounds, such as 3,4-diaminobutanesulfonic acid, 3,6-diamino-2-toluenesulfonic acid, 2,6-diaminobenzenesulfonic acid, N-(2-aminoethyl)-2-aminosulfonic acid, N-(2-aminoethyl)-2-aminoethylsulfonic acid, N-2-aminoethane-2-aminosulfonic acid, and N-(2-aminoethyl)-β-alanine, and salts thereof. These compounds may be used alone or in combination of two or more.

The proportion of the anionic group-containing compound (c) used in the raw materials constituting the anionic urethane resin (X) is preferably within a range of 0.1% to 20% by mass, and more preferably within a range of 0.5% to 10% by mass.

The chain extender (d) has a molecular weight of less than 500 (preferably within a range of 50 to 450). Examples of the chain extender (d) that can be used include: an amino group-containing chain extender (d1), such as ethylenediamine, 1,2-propanediamine, 1,6-hexamethylenediamine, piperazine, 2,5-dimethylpiperazine, isophoronediamine, 1,2-cyclohexanediamine, 1,3-cyclohexanediamine, 1,4-cyclohexanediamine, 4,4'-dicyclohexylmethanediamine, 3,3'-dimethyl-4,4'-dicyclohexylmethanediamine, 1,4-cyclohexanediamine, and hydrazine; and hydroxyl group-containing chain extender (d2), such as ethylene glycol, diethylene glycol, triethylene glycol, propylene glycol, dipropylene glycol, 1,3-propanediol, 1,3-butanediol, 1,4-butanediol, hexamethylene glycol, saccharose, methylene glycol, glycerin, sorbitol, bisphenol A, 4,4'-dihydroxydiphenyl, 4,4'-dihydroxydiphenyl ether, and trimethylolpropane. These chain extenders may be used alone or in combination of two or more. Note that the molecular weight of the chain extender (d) is chemical formula weight calculated from a chemical formula.

Of the above-mentioned chain extenders, a chain extender that is produced using the amino group-containing chain extender (d1) as a raw material and not using the hydroxyl group-containing chain extender (d2) as a raw material is preferably employed as the chain extender (d) from the viewpoint of achieving more excellent oleic acid resistance and low-temperature flexibility.

The proportion of the chain extender (d) used in the raw materials constituting the anionic urethane resin (X) is preferably within a range of 0.01% to 10% by mass, and more preferably within a range of 0.1% to 7% by mass.

Examples of a method for producing the anionic urethane resin (X) include: a method in which the polyol (a) as a raw material, the polyisocyanate (b), the anionic group-containing compound (c), and, if necessary, the chain extender (d) are mixed at once and allowed to react; and a method in which the polyol (a), the polyisocyanate (b), and the anionic group-containing compound (c) are allowed to react, thereby obtaining a urethane prepolymer having an isocyanate group, and subsequently the urethane prepolymer is allowed to react with the chain extender (d). Of these methods, the latter method is preferably employed from the viewpoint of ease of reaction control.

In the case of using the latter reaction method, the molar ratio [NCO/OH] of isocyanate groups of the polyisocyanate (b) to hydroxyl groups of the polyol (a) and the anionic group-containing compound (c) is preferably within a range of 1.1 to 1.7 and more preferably within a range of 1.3 to 1.6, from the viewpoint of achieving more excellent oleic acid resistance and low-temperature flexibility.

The molar ratio [NCO/OH+NH] of isocyanate groups of the resultant urethane prepolymer to hydroxyl groups and amino groups of the chain extender (d) is preferably 0.7 or more and less than 1.

Each of the above-mentioned reactions is performed, for example, at a temperature of 50°C to 100°C for 30 minutes to 10 hours.

When the anionic urethane resin (X) is produced, isocyanate groups remaining in the anionic urethane resin (X) may be deactivated. To deactivate the isocyanate groups, an alcohol having one hydroxyl group, such as methanol, is preferably used. The amount of the alcohol used is, for example, within a range of 0.001 to 10 parts by mass, with respect to 100 parts by mass of the anionic urethane resin (X).

When the anionic urethane resin (X) is produced, an organic solvent may be used. Examples of the organic solvent that can be used include: ketone compounds, such as acetone and methyl ethyl ketone; ether compounds, such as tetrahydrofuran and dioxane; acetate compounds, such as ethyl acetate and butyl acetate; nitrile compounds, such as acetonitrile; and amide compounds, such as dimethylformamide and N-methylpyrrolidone. These organic solvents may be used alone or in combination of two or more. Note that the organic solvent is preferably removed in the end, for example, by a distillation method.

The content of the urethane resin (X) in the urethane resin composition is, for example, within a range of 10% to 60% by mass.

Examples of the water (Y) that can be used include ion-exchanged water and distilled water. These types of water may be used alone or in combination of two or more. The content of the water (Y) is, for example, within a range of 35% to 85% by mass.

The urethane resin composition according to the present invention includes the anionic urethane resin (X) and the water (Y), and may further include other additives, if necessary.

Examples of the other additives that can be used include a neutralizer, a cross-linking agent, a thickener, a urethanization catalyst, a filler, a foaming agent, a pigment, a dye, an oil repellent, a hollow foam, a flame retardant, a defoaming agent, a leveling agent, and an antiblocking agent. These additives may be used alone or in a combination of two or more.

In the present invention, from the viewpoint of achieving more excellent hydrolysis resistance, oleic acid resistance, and low-temperature flexibility, the urethane resin composition is devoid of any emulsifier (Z).

Examples of the emulsifier (Z) include: nonionic emulsifiers, such as polyoxyethylene nonylphenyl ether, polyoxyethylene lauryl ether, polyoxyethylene styrylphenyl ether, polyoxyethylene sorbitol tetraoleate, and polyoxyethylene-polyoxypropylene copolymers; anionic emulsifiers, such as fatty acid salts including sodium oleate, alkyl sulfates, alkyl benzenesulfonates, alkyl sulfosuccinates, naphthalene sulfonates, polyoxyethylene alkyl sulfates, sodium alkane sulfonates, and sodium alkyl diphenyl ether sulfonates; and cationic emulsifiers, such as alkyl amine salts, alkyl trimethyl ammonium salts, and alkyl dimethyl benzyl ammonium salts.

Furthermore, the acid value of the anionic urethane resin (X) is preferably within a range of 5 to 15 mgKOH/g from the viewpoints of achieving more excellent hydrolysis resistance, oleic acid resistance, and low-temperature flexibility, and achieving good emulsifiability and postemulsification liquid stability without using the emulsifier (Z). The acid value of the anionic urethane resin (X) can be adjusted using the amount of the anionic group-containing compound (c) used as a raw material. Note that a method for measuring the acid value of the anionic urethane resin (X) will be described later in Examples.

As described above, the urethane resin composition according to the present invention is an environment-responsive material including water, and is capable of forming a coating excellent in oleic acid resistance and low-temperature flexibility. Furthermore, when satisfying a specific requirement, the urethane resin composition is capable of forming the coating also excellent in hydrolysis resistance. Thus, the urethane resin composition according to the present invention can be suitably used as a material for synthetic leather, and in particular, can be suitably used as a material for forming a skin layer.

Next, a synthetic leather in which the urethane resin composition according to the present invention is used as a material for a skin layer will be described.

Examples of the synthetic leather include a synthetic leather including at least a base fabric and a skin layer.

Examples of the base fabric that can be used include: a plastic substrate; and a fibrous substrate, such as nonwoven fabrics, woven fabrics, and knitted fabrics. Of these substrates, the fibrous substrate is preferably used from the viewpoint of achieving good softness. Examples of a material constituting the fibrous substrate that can be used include polyester fibers, nylon fibers, acrylic fibers, acetate fibers, rayon fibers, polylactic acid fibers, cotton, hemp, silk, wool, and fiber mixtures thereof.

The thickness of the skin layer is, for example, within a range of 5 to 100 μm.

The synthetic leather may further include one or more layers selected from the group consisting of a wet porous layer, an intermediate layer, a bonding layer, and a surface-treated layer, if necessary. A well-known material can be used as any material that constitutes these layers.

[Examples]

Hereinafter, the present invention will be described in more detail by way of Examples.

[Example 1]

A four-neck flask equipped with a stirrer, a reflux condenser, a thermometer, and a nitrogen gas introduction tube was charged, under a nitrogen flow, with 250 parts by mass of polycarbonate polyol ("BENEBiOL NL-3010DB" manufactured by Mitsubishi Chemical Corporation, produced using 1,4-butanediol and biomass-derived 1,10-decanediol as raw materials, molar ratio [(C4)/(C10)] = 90/10, number average molecular weight: 3,000, hereinafter abbreviated as "bio-PC"), 100 parts by mass of methyl ethyl ketone, and 11 parts by mass of 2,2-dimethylolpropionic acid (hereinafter abbreviated as "DMPA"). The mixture was sufficiently stirred and mixed. Then, 18 parts by mass of dicyclohexylmethane diisocyanate (hereinafter abbreviated as "HMDI") and 25 parts by mass of hexamethylene diisocyanate (hereinafter abbreviated as "HDI") were added, and subsequently, 0.03 part by mass of bismuth carboxylate was added. The resultant mixture was allowed to react at 75°C for approximately 4 hours, whereby a methyl ethyl ketone solution of a urethane prepolymer having an isocyanate group was obtained.

Subsequently, 8 parts by mass of triethylamine was added to neutralize a carboxyl group in the urethane prepolymer. After the completion of the neutralization, 825 parts by mass of ion-exchanged water was added, and then 2.81 parts by mass of piperazine (hereinafter abbreviated as "Pip") was added, and the resultant mixture was allowed to react. After the completion of the reaction, methyl ethyl ketone was removed by evaporation under reduced pressure, whereby a urethane resin composition (non-volatile content: 30% by mass, acid value: 14.76 mgKOH/g) was obtained.

[Examples 2 to 9, Comparative Examples 1 to 3]

Urethane resin compositions were obtained in the same manner as in Example 1, except that the kind and amount of materials to be used were changed as described in Tables 1 and 2.

[Method for Measuring Number Average Molecular Weight]

The number average molecular weight of each of the polyol and others used in Examples and Comparative Examples is a value determined by gel permeation chromatography (GPC) under the following conditions.

Measurement Device: High performance GPC ("HLC-8220GPC", manufactured by Tosoh Corporation)
Columns: The following columns manufactured by Tosoh Corporation were connected in series and used.

"TSKgel G5000" (7.8 mm I.D. $\times$ 30 cm) $\times$ 1
"TSKgel G4000" (7.8 mm I.D. $\times$ 30 cm) $\times$ 1
"TSKgel G3000" (7.8 mm I.D. $\times$ 30 cm) $\times$ 1
"TSKgel G2000" (7.8 mm I.D. $\times$ 30 cm) $\times$ 1

Detector: RI (differential refractometer)
Column Temperature: 40°C
Eluent: tetrahydrofuran (THF)
Flow Rate: 1.0 mL/minute
Injection Amount: 100 $\mu$L (a tetrahydrofuran solution having a sample concentration of 0.4% by mass)
Standard samples: The following types of standard polystyrene were used to produce a calibration curve.

(Standard Polystyrene)

"TSKgel standard polystyrene A-500", manufactured by Tosoh Corporation
"TSKgel standard polystyrene A-1000", manufactured by Tosoh Corporation
"TSKgel standard polystyrene A-2500", manufactured by Tosoh Corporation
"TSKgel standard polystyrene A-5000", manufactured by Tosoh Corporation
"TSKgel standard polystyrene F-1", manufactured by Tosoh Corporation
"TSKgel standard polystyrene F-2", manufactured by Tosoh Corporation
"TSKgel standard polystyrene F-4", manufactured by Tosoh Corporation
"TSKgel standard polystyrene F-10", manufactured by Tosoh Corporation
"TSKgel standard polystyrene F-20", manufactured by Tosoh Corporation
"TSKgel standard polystyrene F-40", manufactured by Tosoh Corporation
"TSKgel standard polystyrene F-80", manufactured by Tosoh Corporation
"TSKgel standard polystyrene F-128", manufactured by Tosoh Corporation
"TSKgel standard polystyrene F-288", manufactured by Tosoh Corporation
"TSKgel standard polystyrene F-550", manufactured by Tosoh Corporation

[Method for Measuring Acid Value of Anionic Urethane Resin (X)]

The urethane resin composition obtained in each of Examples and Comparative Examples was dried, and 0.05 g to 0.5 g of dried and solidified resin particles were weighed into a 300-mL Erlenmeyer flask. Subsequently, approximately 80 mL of a solvent mixture of tetrahydrofuran and ion-exchanged water at a mass ratio [tetrahydrofuran/ion-exchanged water] of 80/20 was added, whereby a solution mixture was obtained.
Next, a phenolphthalein indicator was mixed with the solution mixture. Then, the resulting mixture was titrated with a 0.1-mol/L aqueous potassium hydroxide solution standardized in advance. The acid value (mgKOH/g) of the aqueous urethane resin (A) was determined according to the following computational formula (1) by using the amount of the aqueous potassium hydroxide solution used for the titration.

$$\text{Computational formula } A = (B \times f \times 5.611)/S \quad (1)$$

In formula (1), A is the acid value (mgKOH/g) of the solid content of the resin; B is the amount (mL) of the 0.1-mol/L aqueous potassium hydroxide solution used for the titration; f is the factor of the 0.1-mol/L aqueous potassium hydroxide solution; S is the mass (g) of the resin particles: and 5.611 is the formula weight of potassium hydroxide (56.11/10).

[Method for Evaluating Oleic Acid Resistance]

100 parts by mass of each of the urethane resin compositions obtained in Examples and Comparative Examples and 1 part by mass of a thickener ("HYDRAN ASSISTER T10", manufactured by DIC Corporation) were mixed. The resultant liquid mixture was applied onto a flat release paper sheet ("EK-100D", manufactured by LINTEC Corporation) so as to achieve a dry thickness of 30 $\mu$m, and dried at 70°C for 2 minutes, then dried at 120°C for 2 minutes, whereby a polyurethane film was obtained. Subsequently, the polyurethane film was cut into strip pieces each having a width of 5 mm and a length of 50 mm, and the resultant pieces were used as test specimens. Using a tensile tester ("Autograph AG-I", manufactured by Shimadzu Corporation), one of the test specimens was subjected to a tensile test under the conditions of a chuck distance of 40 mm, a tensile speed of 10 mm/second, and a temperature of 23°C, and thus, a stress at 100% elongation (100% modulus, hereinafter referred to as "100%M (1)") was measured.
Subsequently, another one of the test specimens was immersed in oleic acid at 23°C for 24 hours. Then, the test specimen was taken out, and oleic acid attached to a surface of the test piece was wiped away. Then, a 100% modulus value (hereinafter referred to as "100%M (2)") was measured in the same manner as for the 100%M (1). The percentage of retention was calculated by dividing the 100%M (2) by the 100%M (1), and evaluated as follows.

"A": The percentage of retention was 50% or more.
"B": The percentage of retention was 30% or more and less than 50%.
"C": The percentage of retention was less than 30%.

[Method for Evaluating Low-temperature Flexibility]

100 parts by mass of each of the urethane resin compositions obtained in Examples and Comparative Examples, 10 parts by mass of a black pigment ("DILAC HS-9530", manufactured by DIC Corporation), and 1 part by mass of a thickener ("HYDRAN ASSISTER T10", manufactured by DIC Corporation) were mixed. The resultant liquid mixture was applied onto a flat release paper sheet ("DN-TP-155T", manufactured by Ajinomoto Co., Inc.) so as to achieve a dry thickness of 30 $\mu$m, and dried at 70°C for 2 minutes, then dried at 120°C for 2 minutes, whereby a skin layer was obtained.
Next, 100 parts by mass of a urethane resin adhesive ("HYDRAN WLA-515AR", manufactured by DIC Corporation), 1 part by mass of a thickener ("HYDRAN ASSISTER T10", manufactured by DIC Corporation), and 8 parts by mass of a polyisocyanate cross-linking agent ("HYDRAN ASSISTER C5", manufactured by DIC Corporation) were mixed. The resultant liquid mixture was applied onto the skin layer so as to achieve a dry thickness of 50 $\mu$m, and dried at 70°C for 3 minutes. Immediately after the drying, a T/R raised fabric was laminated, and the resultant laminate was heat-treated at 120°C for 2 minutes, and subsequently aged at 50°C for 2 days, and then the release paper sheet was peeled off to obtain a synthetic leather.
The obtained synthetic leather was subjected to a flexibility test (at -10°C, 100 times per minute) using a flexometer ("flexometer equipped with cryostat" manufactured by YASUDA SEIKI SEISAKUSHO, LTD.), and the number of times of the test performed until a crack appeared in a surface of the synthetic leather was measured, and the low-temperature flexibility was evaluated as follows.

"A": 30,000 times or more
"B": 10,000 times or more and less than 30,000 times
"C": Less than 10,000 times

[Table 1]

| Table 1 | Example 1 | Example 2 | Example 3 | Example 4 | Example 5 | Example 6 |
|---|---|---|---|---|---|---|
| Polycarbonate polyol (a1) | bio-PC | bio-PC | bio-PC | bio-PC | bio-PC | bio-PC |

## EP 3 901 365 B1

(continued)

| Table 1 | Example 1 | Example 2 | Example 3 | Example 4 | Example 5 | Example 6 |
|---|---|---|---|---|---|---|
| Anionic group-containing compound (c) | DMPA | DMPA | DMPA | DMPA | DMPA | DMPA |
| molar ratio (a1)/(c) | 51/49 | 51/49 | 51/49 | 60/40 | 60/40 | 60/40 |
| Aliphatic polyisocyanate (b1) | HDI | HDI | HDI | HDI | HDI | HDI |
| Alicyclic polyisocyanate (b2) | HMDI | HMDI | HMDI | HMDI | HMDI | HMDI |
| molar ratio (b1)/(b2) | 70/30 | 50/50 | 30/70 | 70/30 | 50/50 | 70/30 |
| NCO/OH | 1.4 | 1.4 | 0.5 | 1.5 | 1.5 | 1.4 |
| Chain extender (d) | Pip | Pip | Pip | Pip | Pip | Pip |
| PP-NCO/NH | 0.8 | 0.8 | 0.8 | 0.8 | 0.8 | 0.8 |
| Acid value of anionic urethane resin (X) (mgKOH/g) | 14.76 | 14.53 | 14.3 | 10.58 | 10.43 | 10.29 |
| Evaluation of oleic acid resistance | A | A | A | A | A | A |
| Evaluation of low-temperature flexibility | A | A | A | A | A | A |

[Table 2]

| Table 2 | Example 7 | Example 8 | Example 9 | Comparative Example 1 | Comparative Example 2 | Comparative Example 3 |
|---|---|---|---|---|---|---|
| Polycarbonate polyol (a1) | bio-PC | bio-PC | bio-PC | Other PC | bio-PC | bio-PC |
| Anionic group-containing compound (c) | DMPA | DMPA | DMPA | DMPA | DMPA | DMPA |
| molar ratio (a1)/(c) | 75/25 | 75/25 | 75/25 | 60/40 | 60/40 | 60/40 |
| Aliphatic polyisocyanate (b1) | HDI | HDI | HDI | HDI | | HDI |
| Alicyclic polyisocyanate (b2) | HMDI | HMDI | HMDI | HMDI | HMDI | |
| molar ratio (b1)/(b2) | 30/70 | 30/70 | 30/70 | 50/50 | 0/100 | 100/0 |
| NCO/OH | 1.4 | 1.4 | 1.4 | 1.4 | 1.4 | 1.4 |
| Chain extender (d) | Pip | IPDA | EDA | Pip | Pip | Pip |
| PP-NCO/NH | 0.8 | 0.8 | 0.8 | 0.8 | 0.8 | 0.8 |
| Acid value of anionic urethane resin (X) (mgKOH/g) | 5.37 | 5.37 | 5.37 | 15.24 | 10.08 | 10.08 |
| Evaluation of oleic acid resistance | A | A | A | C | A | C |
| Evaluation of low-temperature flexibility | A | A | A | B | C | A |

The abbreviations in Tables 1 and 2 indicate as follows.

"C6": 1,6-hexanediol
"Other PC": polycarbonate polyol produced using petroleum-resource-derived 1,6-hexanediol as a raw material (number average molecular weight: 2,000)
"NCO/OH": the molar ratio of isocyanate groups of the polyisocyanate (b) to hydroxyl groups of the polyol (a) and the anionic group-containing compound (c) at the time when a urethane prepolymer is produced.
"IPDA": isophoronediamine
"EDA": ethylenediamine

9

"PP-NCO/NH": The molar ratio [NCO/NH] of isocyanate groups of the urethane prepolymer to amino groups of the chain extender (d) is preferably 0.7 or more and less than 1.

It was found that the urethane resin composition according to the present invention, which was produced using a biomass raw material, was excellent in oleic acid resistance and low-temperature flexibility.

In contrast, Comparative Example 1 was an embodiment in which, instead of the polycarbonate polyol (a1), a polycarbonate polyol produced using petroleum-resource-derived hexanediol was used as a raw material, and this embodiment resulted in particularly poor oleic acid resistance.

Comparative Example 2 was an embodiment in which the aliphatic polyisocyanate (b1) was not used, and this embodiment resulted in poor low-temperature flexibility.

Comparative Example 3 was an embodiment in which the alicyclic polyisocyanate (b2) was not used, and this embodiment resulted in poor oleic acid resistance.

**Claims**

1.    A urethane resin composition comprising:

an anionic urethane resin (X); and
water (Y),
the anionic urethane resin (X) being produced using, as essential raw materials,
a polyol (a) including a polycarbonate polyol (a1) produced using biomass-derived decanediol as a raw material, and
a polyisocyanate (b) including an aliphatic polyisocyanate (b1) and an alicyclic polyisocyanate (b2);
wherein the polycarbonate polyol (a1) is produced further using butanediol as a raw material;
wherein, in the polycarbonate polyol (a1), a molar ratio [(C4)/(C10)] of the butanediol (C4) to the biomass-derived decanediol (C10) is within a range of 75/25 to98/2;
wherein the urethane resin composition is devoid of any emulsifier (Z).

2.    The urethane resin composition according to claim 1, wherein a molar ratio [(b1)/(b2)] of the aliphatic polyisocyanate (b1) to the alicyclic polyisocyanate (b2) is within a range of 10/90 to 90/10.

3.    The urethane resin composition according to claim 1 or 2, wherein the anionic urethane resin (X) is produced further using an amino group-containing chain extender (d1) as a raw material, and not using a hydroxyl group-containing chain extender (d2) as a raw material.

4.    The urethane resin composition according to any one of claims 1 to 3, wherein an acid value of the anionic urethane resin (X) is within a range of 5 to 15 mgKOH/g.

5.    A coating formed from the urethane resin composition according to any one of claims 1 to 4.

6.    A synthetic leather comprising a skin layer formed from the urethane resin composition according to any one of claims 1 to 5.

**Patentansprüche**

1.    Urethanharzzusammensetzung, umfassend:

ein anionisches Urethanharz (X); und
Wasser (Y),
wobei das anionische Urethanharz (X) unter Verwendung der folgenden wesentlichen Rohstoffe hergestellt ist:

ein Polyol (a), einschließlich eines Polycarbonatpolyols (a1), das unter Verwendung von aus Biomasse gewonnenem Decandiol als Rohstoff hergestellt ist, und
ein Polyisocyanat (b), einschließlich eines aliphatischen Polyisocyanats (b1) und eines alicyclischen Polyisocyanats (b2);
wobei das Polycarbonatpolyol (a1) des weiteren unter Verwendung von Butandiol als Rohstoff hergestellt ist;

wobei in dem Polycarbonatpolyol (a1) das Molverhältnis [(C4)/(C10)] von Butandiol (C4) zu Decandiol (C10) aus Biomasse in einem Bereich von 75/25 bis 98/2 liegt;
wobei die Urethanharzzusammensetzung frei von jeglichem Emulgator (Z) ist.

2. Urethanharzzusammensetzung nach Anspruch 1, wobei das Molverhältnis [(b1)/(b2)] des aliphatischen Polyisocyanats (b1) zum alicyclischen Polyisocyanat (b2) in einem Bereich von 10/90 bis 90/10 liegt.

3. Urethanharzzusammensetzung gemäß Anspruch 1 oder 2, wobei das anionische Urethanharz (X) des weiteren unter Verwendung eines Aminogruppen-haltigen Kettenverlängerers (d1) als Rohmaterial und ohne Verwendung eines Hydroxylgruppen-haltigen Kettenverlängerers (d2) als Rohmaterial hergestellt ist.

4. Urethanharzzusammensetzung gemäß einem der Ansprüche 1 bis 3, wobei der Säurewert des anionischen Urethanharzes (X) in einem Bereich von 5 bis 15 mgKOH/g liegt.

5. Beschichtung, die aus der Urethanharzzusammensetzung gemäß einem der Ansprüche 1 bis 4 gebildet ist.

6. Kunstleder, umfassend eine Hautschicht, die aus der Urethanharzzusammensetzung gemäß einem der Ansprüche 1 bis 5 gebildet ist.

**Revendications**

1. Composition de résine uréthane comprenant :

  une résine uréthane anionique (X) ; et
  de l'eau (Y),
  la résine uréthane anionique (X) étant produite à partir des matières premières essentielles suivantes :

  un polyol (a) comprenant un polyol polycarbonate (a1) produit en utilisant du décanediol dérivé de la biomasse comme matière première, et
  un polyisocyanate (b) comprenant un polyisocyanate aliphatique (b1) et un polyisocyanate alicyclique (b2) ;
  dans laquelle le polycarbonate polyol (a1) est produit en outre en utilisant du butanediol comme matière première ;
  dans laquelle, dans le polyol polycarbonate (a1), le rapport molaire [(C4)/(C10)] entre le butanediol (C4) et le décanediol (C10) dérivé de la biomasse est compris dans une plage de 75/25 à 98/2 ;
  dans laquelle la composition de résine uréthane est dépourvue de tout émulsifiant (Z).

2. Composition de résine uréthane selon la revendication 1, dans laquelle le rapport molaire [(b1)/(b2)] entre le polyisocyanate aliphatique (b1) et le polyisocyanate alicyclique (b2) est compris dans une plage de 10/90 à 90/10.

3. Composition de résine uréthane selon la revendication 1 ou 2, dans laquelle la résine uréthane anionique (X) est produite en outre en utilisant un agent d'allongement de chaîne contenant un groupe amino (d1) comme matière première, et en n'utilisant pas d'agent d'allongement de chaîne contenant un groupe hydroxyle (d2) comme matière première.

4. Composition de résine uréthane selon l'une quelconque des revendications 1 à 3, dans laquelle l'indice d'acide de la résine uréthane anionique (X) est compris dans une plage de 5 à 15 mgKOH/g.

5. Revêtement formé à partir de la composition de résine uréthane selon l'une quelconque des revendications 1 à 4.

6. Cuir synthétique comprenant une couche superficielle formée à partir de la composition de résine uréthane selon l'une quelconque des revendications 1 à 5.

**EP 3 901 365 B1**

**Patent documents cited in the description**

- JP 2016222921 A
- CA 3053737 A1
- JP H04114025 A
- EP 3398980 A1
- JP 2013217006 A
- JP 2018104486 A
- EP 3795603 A1
- JP 2018127758 A